# EUROPEAN PATENT APPLICATION

(11) **EP 4 742 360 A1**
(43) Date of publication of application: **13.05.2026**
(21) Application number: 25159846.2
(22) Date of filing: 25.02.2025
(51) Int. Cl.: H01M 10/42, H01M 10/48, H01M 50/204, H01M 50/507, H01M 50/519

(54) **BATTERY PACK AND ENERGY STORAGE BOX**

(30) Priority: 12.11.2024 CN 202411611951
(71) Applicant: Zhejiang Jinko Energy Storage Co., Ltd., Jiaxing, Zhejiang (CN)
(72) Inventor: SHI, Yanyan, Jiaxing (CN); CHEN, Yuanhang, Jiaxing (CN)
(74) Representative: DREISS Patentanwälte PartG mbB

(57) **Abstract**

The present disclosure relates to a battery pack and an energy storage box, belonging to the field of energy storage technologies. The battery pack includes a battery module, a connector, and a first output terminal base assembly. The battery module includes end plates, an electrical connection bar, and a plurality of battery cells. The plurality of battery cells are located between the end plates, and the electrical connection bar is electrically connected to the plurality of battery cells. The connector is electrically connected to the electrical connection bar. The first output terminal base assembly includes a first body for fixing the connector and a second body for fixing the electrical connection bar. The first body includes a board body and at least two first partitions arranged at intervals. The at least two first partitions each protrude relative to the board body along a length direction of the battery pack, and at least one cavity is formed between the board body and the at least two first partitions. When an electrical fault occurs in the battery pack, by means of the at least one cavity enclosed between the board body and the first partitions, the current can flow around the cavity. That is, the current needs to cross over the first partitions in order to flow towards the charged metal components, thereby increasing the creepage distance and being beneficial to improving the electrical safety performance of the battery pack.

## Description

### TECHNICAL FIELD

The present disclosure relates to the field of energy storage technologies, specifically to a battery pack and an energy storage box.

### BACKGROUND

At present, a battery pack generally includes a low-voltage connector and an output electrical connection bar. The low-voltage connector is mainly used to ensure communication and power transmission between the battery management system (BMS) and other electronic control units. The output electrical connection bar is mainly used to transmit power from the battery pack to the motor controller or other high-voltage electrical devices. The low-voltage connector and the output electrical connection bar are fixed to an end plate of the battery pack through a fixing base.

### SUMMARY

The present disclosure provides a battery pack and an energy-storage box.

In a first aspect, the present disclosure provides a battery pack. The battery pack includes a battery module, a connector, and a first output terminal base assembly. The battery module includes end plates, an electrical connection bar, and a plurality of battery cells that are located between the end plates and electrically connected to the electrical connection bar. The connector is electrically connected to the electrical connection bar. The first output terminal base assembly includes a first body for fixing the connector and a second body for fixing the electrical connection bar. The first body includes a board body and at least two first partitions arranged at intervals. The at least two first partitions protrude relative to the board body along a length direction of the battery pack, and at least one cavity is formed between the board body and the at least two first partitions.

When an electrical fault occurs in the battery pack, by means of the at least one cavity enclosed between the board body and the first partitions, the current can flow around the cavity. That is, the current has to cross over the first partitions in order to flow towards the charged metal components. As a result, the creepage distance can be increased, thereby preventing the creepage current between two charged metal components from flowing along a straight-line path. This reduces a risk of creepage occurring between the connector and metal components such as the end plate, thereby reducing a risk of potential safety hazards, and thus being beneficial to improving the electrical safety performance of the battery pack and ensuring the use safety of the battery pack.

In one or more embodiments, the first body further includes at least two second partitions arranged at intervals. The at least two second partitions connect adjacent first partitions. Along the length direction of the battery pack, a first distance L from a surface of the second partition to a surface of the first partition satisfies 5mm≤L≤10mm. The first partition is perpendicular to a height direction of the battery pack.

In one or more embodiments, a top of the first body is provided with the second partition and a third partition that is arranged parallel to the height direction of the battery pack.

In one or more embodiments, the battery pack further includes a printed circuit board fixedly connected to the connector. The first body includes a fixing member. The printed circuit board is provided with a fixing hole, and the fixing member is capable of extending into the fixing hole to cause the first body to be relatively fixed to the connector. The fixing member is a protruding post extending along a height direction of the battery pack, and the printed circuit board and the first body are riveted by the fixing member. Alternatively, the fixing member is a screw, and the printed circuit board and the first body are thread-connected by the fixing member, the first body has an avoidance space, and the screw is capable of extending into the avoidance space.

In one or more embodiments, the end plate includes an avoidance portion recessed downward along a height direction of the battery pack, and a limit-mating groove is provided at the avoidance portion. The first body further includes a mating portion, the first body is installed at the avoidance portion, the mating portion is located at the limit-mating groove, and a bottom wall of the limit-mating groove along the length direction of the battery pack is used to prevent the mating portion from separating from the limit-mating groove.

In one or more embodiments, the end plate further includes a snap-fit hole. The first body further includes a first snap. The first snap is in snap-fit connection with the snap-fit hole. An inner wall of the snap-fit hole includes a first inclined surface, and the first snap includes a second inclined surface. During a process of the first snap being in snap-fit connection with the snap-fit hole, the first inclined surface is in sliding fit with the second inclined surface.

In one or more embodiments, the second body includes a mounting seat for fixing the electrical connection bar. The first output terminal base assembly further includes a protective cover. The protective cover is detachably connected to the second body. Along a height direction of the battery pack, a safety gap H is formed between the protective cover and the second body. The protective cover at least includes a second snap and a third snap. The second body includes a first barrier wall along a width direction of the battery pack and a second barrier wall along the length direction of the battery pack. The first barrier wall is provided with a first snap-groove, the second barrier wall is provided with a second snap-groove. The first snap-groove is in snap-fit connection with the second snap, and the second snap-groove is in snap-fit connection with the third snap. The second snap is capable of moving relative to the second body or elastically deforming to allow the protective cover to be disconnected from the second body.

In one or more embodiments, the protective cover further includes: a first limit wall and a second limit wall that are arranged at intervals along the width direction of the battery pack, and a third limit wall arranged along the length direction of the battery pack. The second body further includes a third barrier wall arranged along the width direction of the battery pack. The third snap is provided at the third limit wall. The first limit wall and the second snap are located at two sides of the first barrier wall. The first limit wall abuts against the first barrier wall, the second limit wall abuts against the third barrier wall, and each of the first limit wall and the second limit wall abuts against the second barrier wall.

In one or more embodiments, the battery pack further includes at least one second output terminal base assembly. The second output terminal base assembly includes the first body. The first body and the second body of the first output terminal base assembly are formed as an integral structure. Alternatively, the first output terminal base assembly includes a mounting board and at least two first bodies, and along the width direction of the battery pack, adjacent first bodies are connected by the mounting board; and the at least two first bodies, the second body, and the mounting board are formed as an integral structure.

In a second aspect, the present disclosure further provides an energy-storage box. The energy-storage box includes an inverter, a battery management system, and at least one battery pack as described above.

It should be understood that the above general description and the following detailed description are exemplary only and do not limit the present disclosure.

### BRIEF DESCRIPTION OF DRAWINGS

To better illustrate the technical solutions of the embodiments of the present disclosure, the drawings used in the embodiments will be briefly introduced in the following. It is appreciated that, the drawings described below are only some embodiments of the present disclosure. For those of ordinary skill in the art, other drawings can be obtained based on these drawings without creative efforts.
Fig. 1 is a structural schematic diagram of an energy storage box according to one or more embodiments of the present disclosure.
Fig. 2 is a structural schematic diagram of a battery pack according to one or more embodiments of the present disclosure.
Fig. 3 is a structural schematic diagram of a battery module according to one or more embodiments of the present disclosure.
Fig. 4 is a partial enlarged view of part A shown in Fig. 3.
Fig. 5 is a structural schematic diagram of an end plate, a first output terminal base assembly and a second output terminal base assembly according to one or more embodiments of the present disclosure.
Fig. 6 is a structural schematic diagram of an end plate and a first output terminal base assembly according to one or more embodiments of the present disclosure.
Fig. 7 is a structural schematic diagram of an end plate according to one or more embodiments of the present disclosure.
Fig. 8 is a structural schematic diagram of a first output terminal base assembly according to one or more embodiments of the present disclosure.
Fig. 9 is a structural schematic diagram of a first output terminal base assembly from another viewing angle according to one or more embodiments of the present disclosure.
Fig. 10 is a front view of Fig. 8.
Fig. 11 is a structural schematic diagram of a first output terminal base assembly according to one or more embodiments of the present disclosure.
Fig. 12 is a rear view of Fig. 11.
Fig. 13 is a structural schematic diagram of a second output terminal base assembly according to one or more embodiments of the present disclosure.
Fig. 14 is a partial cross-sectional view taken along A-A shown in Fig. 5.
Fig. 15 is a partial enlarged view of part B shown in Fig. 14.
Fig. 16 is a cross-sectional view taken along B-B shown in Fig. 10.
Fig. 17 is a cross-sectional view taken along C-C shown in Fig. 10.
Fig. 18 is an exploded view of a first output terminal base assembly according to one or more embodiments of the present disclosure.
Fig. 19 is a cross-sectional view taken along D-D shown in Fig. 11.
Fig. 20 is a structural schematic diagram of a protective cover according to one or more embodiments of the present disclosure.
Fig. 21 is a partial structural schematic diagram of a first output terminal base assembly according to one or more embodiments of the present disclosure.
Fig. 22 is a partial structural schematic diagram of a fastening pin according to one or more embodiments of the present disclosure.

Reference signs:
1: Battery pack; 11: Battery module; 111: End plate; 1111: Avoidance portion; 1111a: Limit-mating groove; 1112: Snap-fit hole; 1112a: First inclined surface; 112: Electrical connection bar; 114: Connector; 1141: Male end; 1142: Female end; 1142a: Mounting portion; 115: Printed circuit board; 1151: Fixing hole; 2: First output terminal base assembly; 21: First body; 211: board body; 212: First partition; 213: Second partition; 214: Third partition; 215: Fixing member; 216: Avoidance space; 217: Mating portion; 218: First snap; 2181: Second inclined surface; 219: Cavity; 219: First cavity; 2192: Second cavity; 22: Second body; 221: First barrier wall; 2211: First snap-groove; 222: Second barrier wall; 2221: Second snap-groove; 223: Second through-hole; 224: Mounting seat; 225: Third barrier wall; 23: Protective cover; 231: First limit wall; 232: Second snap; 233: Second limit wall; 234: Third limit wall; 2341: Third snap; 235: First through-hole; 236: Extension portion; 24: Fastening pin; 241: deformable portion; 242: Fixing portion; 25: Mounting board; 3: Second output terminal base assembly; 4: Opening portion; 5: Nickel sheet.

### DESCRIPTION OF EMBODIMENTS

To better illustrate the technical solutions of the present disclosure, the embodiments of the present disclosure will be described in detail below with reference to the accompanying drawings.

It should be clear that the described embodiments are only some of the embodiments of the present disclosure, not all of the embodiments. Based on the embodiments in the present disclosure, all other embodiments obtained by those of ordinary skill in the art without creative efforts will fall within a scope of the present disclosure.

The terms used in the embodiments of the present disclosure are only for the purpose of describing specific embodiments and are not intended to limit the present disclosure. The singular forms "a/an", "the" and "said" used in the embodiments of the present disclosure and the appended claims are also intended to include plural forms, unless the context clearly indicates otherwise.

It should be understood that the term "and/or" used herein is only an associated relationship describing associated objects, indicating that there can be three relationships. For example, A and/or B can mean: A exists alone, both A and B exist simultaneously, and B exists alone. In addition, the character "/" herein generally indicates an "or" relationship between the associated objects.

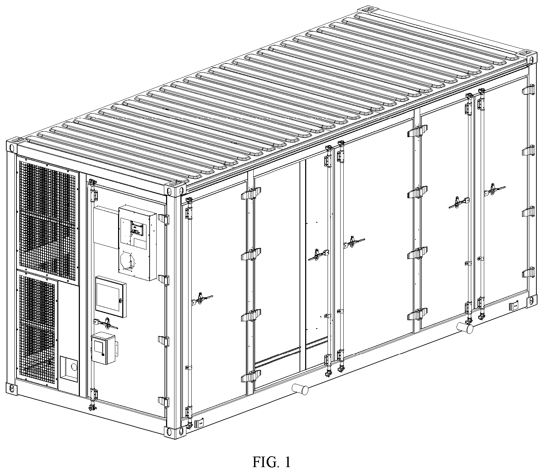

The battery pack 1 provided by an embodiment of the present disclosure can be used in an energy storage box. Referring to Fig. 1, the energy storage box includes a cabinet, an inverter, and at least one battery pack 1. The cabinet includes an accommodating cavity, and the inverter and the battery pack 1 are accommodated in the accommodating cavity. The inverter is used to convert a direct current into an alternating current. The inverter has advantages such as high conversion efficiency, fast startup speed, and high safety, and can also have functions such as short-circuit protection, overload protection, over/under-voltage protection, and over-temperature protection.

In some large-scale energy storage boxes, a battery management system can also be included. The battery management system is used to make the battery pack 1 operate within a safe working range. The charging and discharging power of the battery pack 1 can be controlled according to factors such as the ambient temperature, battery status, and power demand, thereby improving the safety of the battery pack 1 and making the working state of the battery pack 1 more reasonable, thus helping to improve the endurance and service life of the battery pack 1.

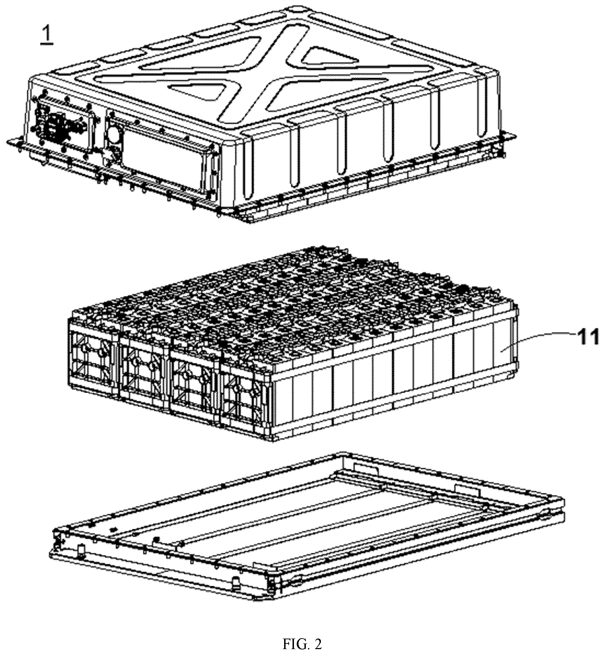

Referring to Fig. 2, the battery pack 1 includes a box body and at least one battery module 11, and the battery module 11 is accommodated in the box body. The box body can be made of aluminum, aluminum alloy, or other metal materials, or non-metal materials. The box body is used to provide an accommodating space for the battery module 11, and the box body can adopt various structures.

In some embodiments, the box body can include a bottom cover and an upper box cover. The bottom cover is of a structure having an opening at the top. The size of the upper box cover is equivalent to the size of the opening at the top of the bottom cover. The upper box cover can cover the bottom cover, and the upper box cover and the bottom cover can be connected to each other by fasteners such as bolts. The upper box cover and the bottom cover enclose to form an accommodating space for accommodating the battery module 11. The box body can be formed as various shapes, such as a cylinder, a cuboid, etc.

A sealing member can also be provided between the upper box cover and the bottom cover to seal the accommodating space.

In the battery pack 1, the battery module 11 includes a plurality of battery cells. The battery cells can be secondary batteries. A plurality of battery cells can be connected in series, in parallel, or in a hybrid manner. A hybrid connection means that there are both series and parallel connections among the plurality of battery cells. In some embodiments, the plurality of battery cells can be directly connected in series, in parallel, or in a hybrid manner, and then the entirety formed by the plurality of battery cells is accommodated in the box body. The plurality of battery cells can be arranged side by side along the length direction X of the battery pack 1, or can be arranged side by side along the width direction Y of the battery pack 1.

In some other embodiments, it can also be that a plurality of battery cells are first connected in series, in parallel, or in a hybrid manner to form a battery module 11, and then multiple battery modules 11 are connected in series, in parallel, or in a hybrid manner to form an entirety, which is then accommodated in the box body. The battery module 11 includes a frame structure. The frame structure can include an end plate 111, a side plate, a top plate, and a bottom plate that are connected together. The plurality of battery cells are located in the inner cavity of the frame structure and are stacked in the inner cavity of the frame structure. The stacking direction can be a length direction X, a width direction Y, or a height direction Z.

In addition, the battery pack 1 can further include other structures, such as a busbar component, which is used to achieve electrical connection between multiple battery cells.

The battery cell can be formed as a shape of a cylinder, a flat body, a cuboid, or other shapes.

Furthermore, the battery cell includes a housing, a top cover, a bare cell, and other functional components.

In some embodiments, the housing and the top cover can be formed as separate components. The housing includes an opening, and the top cover covers the opening of the housing to isolate the internal environment of the battery cell from the external environment. The internal environment enclosed by the housing and the top cover can be used to accommodate the bare cell, electrolyte, and other components. In some other embodiments, the top cover and the housing can be formed as integral structure. For example, the top cover and the housing can first form a common connection surface before other components are placed into the housing. When it is necessary to seal the inside of the housing, the top cover then covers the housing.

The housing can be formed as various shapes and sizes, such as a cuboid, a cylinder, a hexagonal prism, etc. The shape of the housing can be determined according to the specific shape and size of the bare cell. The material of the housing can also be various, such as copper, iron, aluminum, stainless steel, aluminum alloy, plastic, etc., which is not restricted by the embodiments of the present disclosure.

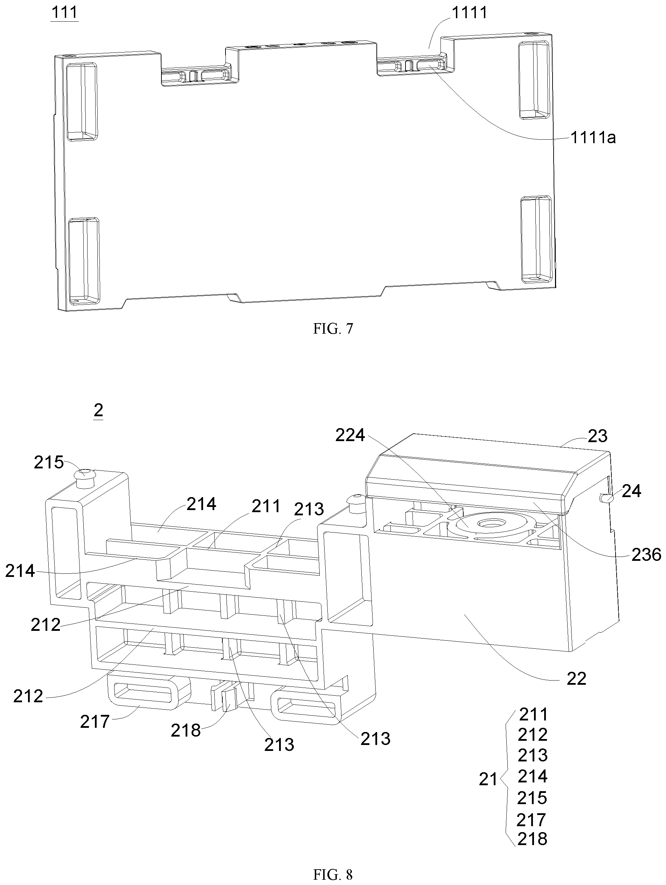

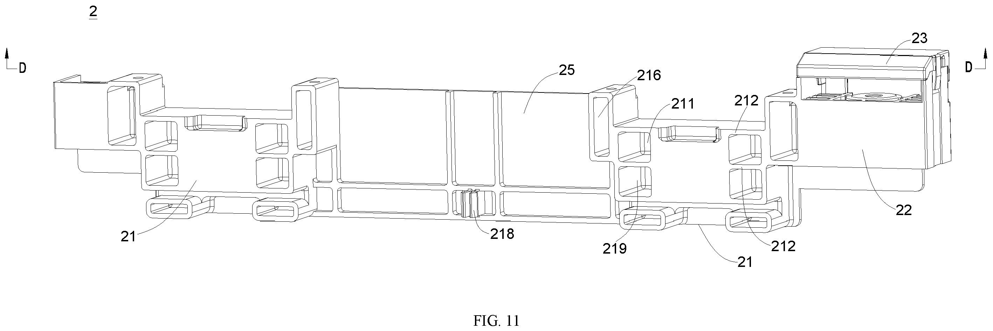

Some embodiments of the present disclosure provide a battery pack 1, as shown in Figs. 2 to 4, the battery pack 1 includes a battery module 11, a connector 114, and a first output terminal base assembly 2. The battery module 11 includes end plates 111, an electrical connection bar 112, and a plurality of battery cells. The plurality of battery cells are located between the end plates 111, and the electrical connection bar 112 is electrically connected to the battery cell. The connector 114 is electrically connected to the electrical connection bar 112. The first output terminal base assembly 2 includes a first body 21 for fixing the connector 114 and a second body 22 for fixing the electrical connection bar 112. As shown in Figs. 8 and 11, the first body 21 includes a board body 211 and at least two first partitions 212 arranged at intervals. The first partitions 212 protrude relative to the board body 211 along the length direction X of the battery pack 1, and there is at least one cavity 219 between the board body 211 and the first partitions 212.

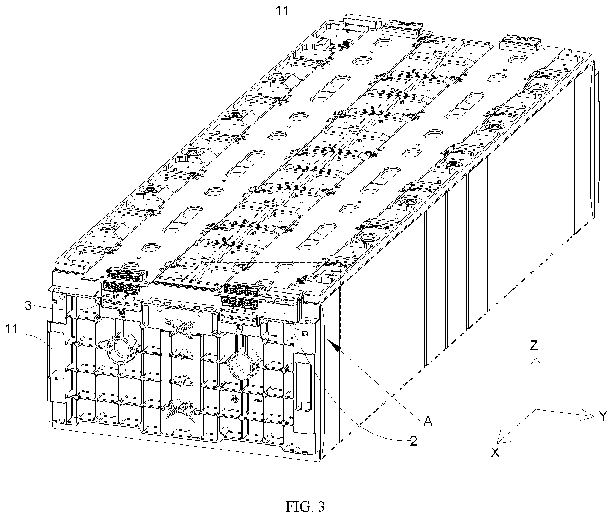

It should be noted that, as shown in Fig. 3, the length direction of the battery pack can be the direction X in the figure, the width direction of the battery pack can be the direction Y in the figure, and the height direction of the battery pack can be the direction Z in the figure.

Next, the current flow direction of the first output terminal base assembly 2 according to embodiments shown in Fig. 8 will be described in detail in the following.

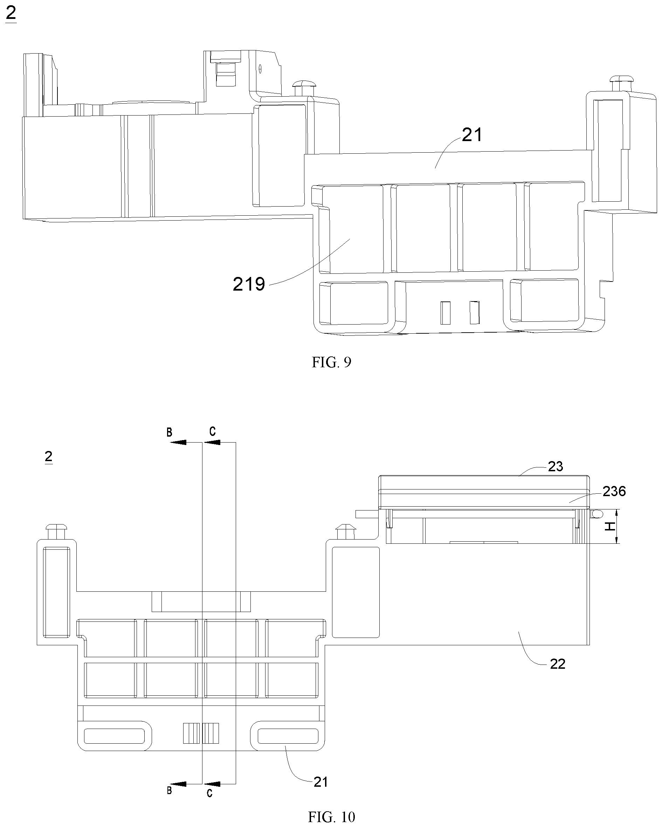

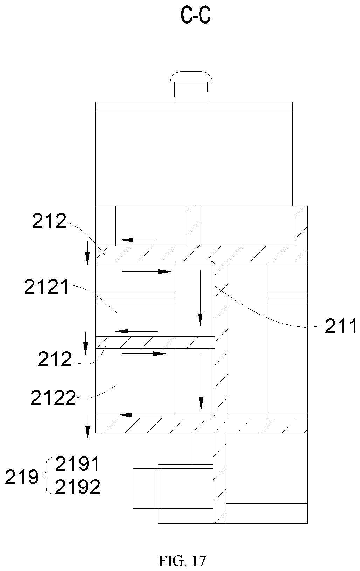

As shown in Figs. 10, 16, and 17, along the height direction Z of the battery pack 1, the board body 211 and the first partitions 212 of the first body 21 enclose to form a first cavity 2191 and a second cavity 2192. When an electrical fault occurs in the battery pack 1, for example, when the low-voltage connector 114 leaks electricity, taking the current flowing along the height direction Z of the battery pack 1 towards the end plate 111 as an example, the current flows into the first cavity 2191 through a first partition 212. The current flows around the first cavity 2191 (flows along the side wall of the first cavity 2191 to the surface of the board body 211 in the first cavity 2191, and then flows to the next side wall of the first cavity 2191). Then, the current continues to flow downward to the next first partition 212, and then the current can flow into the second cavity 2192 and flow around the second cavity 2192 (flows along the side wall of the second cavity 2192 to the surface of the board body 211 in the second cavity 2192, and then flows to the next side wall of the second cavity 2192). This can increase the creepage path of the current along the length direction X of the battery pack 1, that is, it is conducive to increasing the creepage distance, greatly reducing a risk of creepage occurring between the connector 114 and the end plate 111, and thus reducing the risk of creepage occurring between charged metal components.

Therefore, when an electrical fault occurs in the battery pack 1, such as electricity leakage, by means of at least one cavity 219 enclosed by the board body 211 and the first partitions 212, the current can flow around the cavity 219. That is, the current has to cross over the first partitions 212 in order to flow towards the charged metal components, thereby increasing the creepage distance. This prevents the creepage current between two charged metal components from reaching along a straight-line path, thereby reducing a risk of creepage occurring between the connector 114 and metal components such as the end plate 111, reducing the risk of potential safety hazards, and thus being beneficial to improving the electrical safety performance of the battery pack 1 and ensuring the use safety of the battery pack 1.

Similarly, in the embodiments shown in Fig. 11, there is also at least one cavity 219 between the board body 211 and the first partitions 212. The current can also flow around this cavity 219, that is, the current has to cross over the first partitions 212 in order to flow towards the charged metal components. The principle of the current flowing around the cavity 219 is the same as that in the embodiments of Fig. 8, so it will not be elaborated herein.

The end plate 111 can be made of a metal material such as aluminum alloy. The first output terminal base assembly 2 can be made of a plastic material such as polypropylene (PP), polybutylene terephthalate + glass fiber (PBT + GF), acrylonitrile-butadiene-styrene copolymer (ABS), etc. That is, the first output terminal base assembly 2 is made of an insulating material. The cavity 219 enclosed by the board body 211 and the first partitions 212 of the first body 21 is beneficial to enhancing the insulation protection between the electrical connection bar 112, the connector 114, and charged metal components such as the end plate 111.

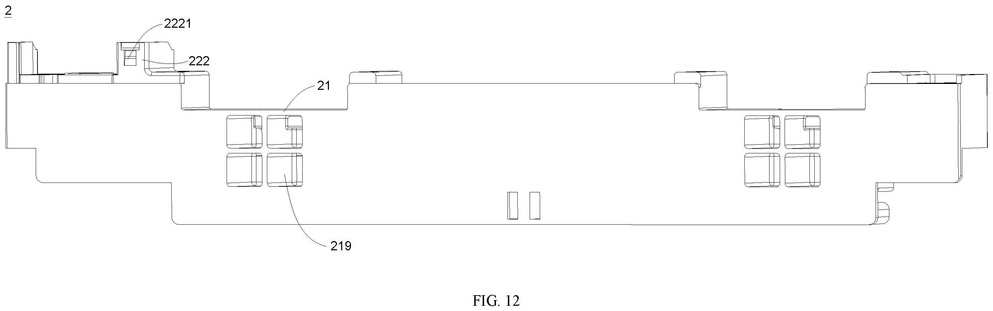

In addition, as shown in Figs. 9 and 12, the back of the first output terminal base assembly 2 can also form the above-mentioned multiple cavities 219, to further reduce a risk of creepage occurring between charged metal components, thereby improving the use safety.

Moreover, the first body 21 and the second body 22 of the first output terminal base assembly 2 are formed as an integral structure. Compared with a case that the first body 21 and the second body 22 are formed as separate structures, the first body 21 and the second body 22 of the first output terminal base assembly 2 being formed as an integral structure can be beneficial to reducing the number of components, and reducing the processes of installing the first body 21 and the second body 22, thereby improving the assembly efficiency and reducing the assembly cost.

In one or more embodiments, as shown in Figs. 8 and 11, the first partition 212 is perpendicular to the height direction Z of the battery pack 1, which is convenient for processing and is beneficial to improving the structural strength of the first body 21.

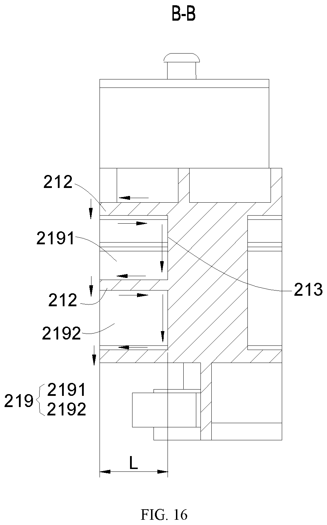

In one or more embodiments, as shown in Figs. 8 and 16, the first body 21 further includes at least two second partitions 213 arranged at intervals. The second partitions 213 connect adjacent first partitions 212. Along the length direction X of the battery pack 1, a first distance L from the surface of the second partition 213 to the surface of the first partition 212 satisfies 5mm≤L≤ 10mm. In some embodiments, the first distance L may be 5mm, 6mm, 7mm, 8mm, 9mm, 10mm, etc.

At least two second partitions 213 are arranged at intervals along the width direction Y of the battery pack 1 in the first cavity 2191 and the second cavity 2192, so that the first cavity 2191 and the second cavity 2192 form multiple flow-around cavities. The second partitions 213 are used to support two adjacent first partitions 212, to reduce the risk of torsion or deformation of the first partitions 212, thus strengthening the first cavity 2191 and the second cavity 2192, and thus facilitating the improvement of the structural strength of the first body 21. In addition, the first partition 212 is perpendicular to the height direction Z of the battery pack 1, and the second partition 213 is parallel to the height direction Z of the battery pack 1, so that the first partitions 212 and the second partitions 213 form a square grid-like structure. The formed grid-like structure is conducive to enhancing the structural strength of the first body 21.

Furthermore, as shown in Figs. 10, 16, and 17, during the process of current creepage, the current can flow through the surfaces of the board body 211 and the second partitions 213 in the first cavity 2191 and the second cavity 2192. Along the length direction X of the battery pack 1, there is a first distance L from the surface of the second partition 213 to the surface of the first partition 212, that is, the second partition 213 is lower than the surface of the first partition 212. During the process of current creepage through the second partition 213, the current can flow around along the length direction X of the battery pack 1, and the length of the flow-around path is at least four times the first distance, thereby being beneficial to increasing the creepage distance of the current.

When the first distance L is too small, during the process of current creepage through the second partition 213, the current flow-around path is greatly reduced along the length direction X of the battery pack 1, thus greatly reducing the creepage distance of the current and increasing the risk of creepage occurring between the connector 114 and metal components such as the end plate 111. When the first distance L is too large, that is, the length of the second partition 213 protruding relative to the board body 211 is small along the length direction X of the battery pack 1, and an area of the connection structure between the second partition 213 and the first partition 212 is greatly reduced, thus greatly reducing the supporting effect of the second partition 213 on the first partition 212, thereby being not conducive to the structural stability of the first body 21. Therefore, when 5mm≤L≤10mm, it can greatly increase the current flow-around path, and enable the second partition 213 to have a good supporting effect on the first partition 212, so that the first body 21 has good structural stability.

In one or more embodiments, the second partition 213 can also increase the creepage distance along the length direction X of the battery pack 1. That is, the current can flow through the second partition 213 along the width direction Y of the battery pack 1 and cross over the second partition 213, thereby further improving the electrical safety performance of the battery pack 1.

In one or more embodiments, as shown in Fig. 8, a second partition 213 and a third partition 214 arranged parallel to the height direction Z of the battery pack 1 are provided at the top of the first body 21.

The third partition 214 can be used for the current to flow around along the height direction Z of the battery pack 1, that is, to increase the creepage distance of the current along the height direction Z of the battery pack 1. The current has to cross over the third partition 214 in order to flow towards the charged metal components (for example, the current has to cross over the third partition 214 in order to flow from the connector 114 to the end plate 111). The second partition 213 at the top of the first body 21 is used to connect at least two third partitions 214 along the length direction X of the battery pack 1, so that the top wall of the first body 21 is approximately formed as a grid-like structure, thereby increasing the creepage distance and thus further improving the use safety of the battery pack 1. In addition, the second partition 213 at the top of the first body 21 can support the third partition 214, thereby being beneficial to improving the strength of the third partition 214, and making the top of the first body 21 approximately formed as a grid-like structure, which is beneficial to further improving the structural strength of the first body 21.

In one or more embodiments, the second partition 213 at the top of the first body 21 can also be used for the current to flow around along the height direction Z of the battery pack 1, that is, to increase the creepage distance of the current along the height direction Z of the battery pack 1, in such a manner that the current has to cross over the second partition 213 at the top of the first body 21 in order to flow towards the charged metal components (for example, the current has to cross over the second partition 213 at the top of the first body 21 along the width direction Y of the battery pack 1 in order to flow from the connector 114 to the electrical connection bar 112). Therefore, the top of the first body 21 is provided with the second partition 213 and the third partition 214 to increase the creepage distance, thereby preventing the creepage current between the charged metal components connected to the first output terminal base assembly 2 from reaching in a straight-line path, thus reducing the creepage risk and improving the electrical safety performance of the battery pack 1.

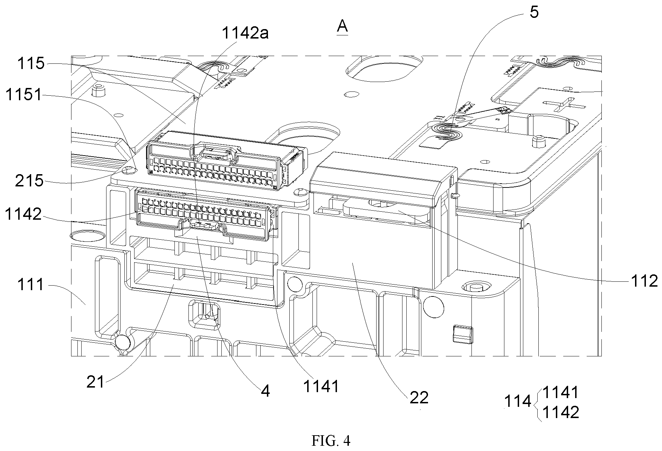

As shown in Fig. 4, the top of the first body 21 is further provided with an opening portion 4. The connector 114 includes a male end 1141 and a female end 1142. The male end 1141 and the female end 1142 are detachably connected to each other. The female end 1142 is provided with a mounting portion 1142a. The mounting portion 1142a protrudes relative to the female end 1142 and can elastically deform, so that the female end 1142 can be in snap-fit engagement with the male end 1141. The opening portion 4 can avoid the mounting portion 1142a, and workers can put their hands into the opening portion 4 to drive the deformation of the mounting portion 1142a, thereby improving the convenience of connecting the male end 1141 and the female end 1142 and facilitating assembly.

In addition, in one or more embodiments, the bottom wall of the opening portion 4 may inclines downward along the height direction Z of the battery pack 1, so that workers have a larger operating space along the height direction Z of the battery pack 1 to drive the elastic deformation of the mounting portion 1142a.

In one or more embodiments, as shown in Figs. 4 and 8, the battery pack 1 further includes a printed circuit board (PCB) 115 fixedly connected to the connector 114. The first body 21 includes a fixing member 215, and the printed circuit board 115 is provided with a fixing hole 1151. The fixing member 215 can extend into the fixing hole 1151, so that the first body 21 is fixed relative to the connector 114.

The connector 114 is connected to the printed circuit board 115 by soldering. The first body 21 is connected to the printed circuit board 115 through the fixing member 215, so that the connector 114 is fixed to the first body 21. This enables the printed circuit board 115 to collect signals such as the temperature and voltage during the operation of the battery cells and output the collected signals through the connector 114, thereby being beneficial to improving the working performance of the battery pack 1.

In addition, as shown in Fig. 4, the electrical connection bar 112 is electrically connected to the printed circuit board 115 through a nickel sheet 5.

In one or more embodiments, as shown in Figs. 4, 8, and 11, the fixing member 215 is a protruding post extending along the height direction Z of the battery pack 1, and the printed circuit board 115 and the first body 21 are riveted by the fixing member 215. Alternatively, the fixing member 215 is a screw, the printed circuit board 115 and the first body 21 are thread-connected by the fixing member 215, the first body 21 has an avoidance space 216, and the screw can extend into the avoidance space 216.

In some embodiments, when the fastener is a screw (not shown in the drawings), the first body 21 is detachably connected to the printed circuit board 115, so that the connector 114 is detachably connected to the first output terminal base assembly 2, thereby being facilitating the replacement and maintenance of the first output terminal base assembly 2 and the connector 114. In addition, the avoidance space 216 is used to avoid the screw. During the process of threaded connection, the screw can extend into the avoidance space 216, thereby improving the feasibility of the threaded connection between the first body 21 and the printed circuit board 115, and thus improving the feasibility of the connection between the first output terminal base assembly 2 and the connector 114.

In some other embodiments, when the fastener is a protruding post, during the process of connecting the connector 114 to the first body 21 through the printed circuit board 115, the protruding post extends into the fixing hole 1151. Then, an end of the protruding post is hot-riveted to form a mushroom-like structure, so that a diameter of the hot-riveted end of the protruding post is larger than a diameter of the fixing hole 1151, thereby preventing the protruding post from separating through the fixing hole 1151, so that the connector 114 is fixed relative to the first body 21. Connection is achieved by riveting, there is no need to introduce additional components, thereby reducing the number of components and making the operation easier.

In one or more embodiments, as shown in Figs. 7, 8, and 14, the end plate 111 includes an avoidance portion 1111 recessed downward along the height direction Z of the battery pack 1. A limit-mating groove 1111a is provided in the avoidance portion 1111. The first body 21 further includes a mating portion 217. The first body 21 is installed at the avoidance portion 1111, the mating portion 217 is located at the limit-mating groove 1111a, and the bottom wall of the limit-mating groove 1111a along the length direction X of the battery pack 1 is used to prevent the mating portion 217 from separating from the limit-mating groove 1111a.

The first body 21 can be located in the avoidance portion 1111. The side wall of the avoidance portion 1111 can restrict the first body 21 from moving relative to the end plate 111 along the width direction Y of the battery pack 1. In addition, along the length direction X of the battery pack 1, the mating portion 217 can extend into the limit-mating groove 1111a to be engaged with each other in a snap-fit manner, thereby enabling the limit-mating groove 1111a to restrict the first body 21 from moving along the width direction Y and the height direction Z of the battery pack 1. Moreover, the bottom wall of the limit-mating groove 1111a can prevent the first body 21 from moving away from the battery cell along the length direction X of the battery pack 1. This reduces the risk of relative movement between the first body 21 and the end plate 111, thereby reducing the risk of relative movement between the first output terminal base assembly 2 and the end plate 111,thus being conducive to improving the reliability and stability of the connection between the first output terminal base assembly 2 and the end plate 111. Additionally, since the limit-mating groove 1111a is located in the avoidance portion 1111, compared with a situation where the limit-mating groove 1111a is provided at another position of the end plate 111, it helps to reduce a volume of the end plate 111 along the length direction X of the battery pack 1. This allows the surface of the first body 21 to be flush with the surface of the end plate 111 along the length direction X of the battery pack 1, thereby improving the overall aesthetics of the battery pack 1.

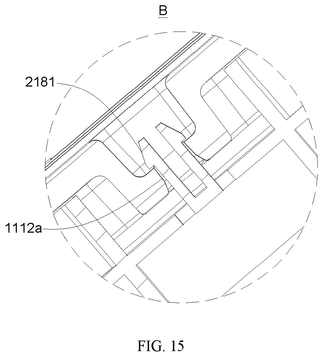

In one or more embodiments, as shown in Fig. 15, the end plate 111 further includes a snap-fit hole, and the first body 21 further includes a first snap 218. The first snap 218 is in snap-fit connection with the snap-fit hole 1112. The inner wall of the snap-fit hole 1112 includes a first inclined surface 1112a, and the first snap 218 includes a second inclined surface 2181. During the process of the first snap 218 being in snap-fit connection with the snap-fit hole 1112, the first inclined surface 1112a is in sliding fit with the second inclined surface 2181.

The first snap 218 can be in the form of a hook-like structure. The snap-fit connection between the first snap 218 and the snap-fit hole 1112 can restrict the first body 21 from moving relative to the end plate 111 along the length direction X of the battery pack 1, further enhancing the reliability and stability of the connection between the first output terminal base assembly 2 and the end plate 111. In addition, during the process of connecting the first body 21 to the end plate 111, the first inclined surface 1112a and the second inclined surface 2181 slide and cooperate with each other, which can guide the snap-fit connection of the first snap 218 and the snap-fit hole 1112, improving the smoothness of the connection between the first body 21 and the end plate 111 for easier connection.

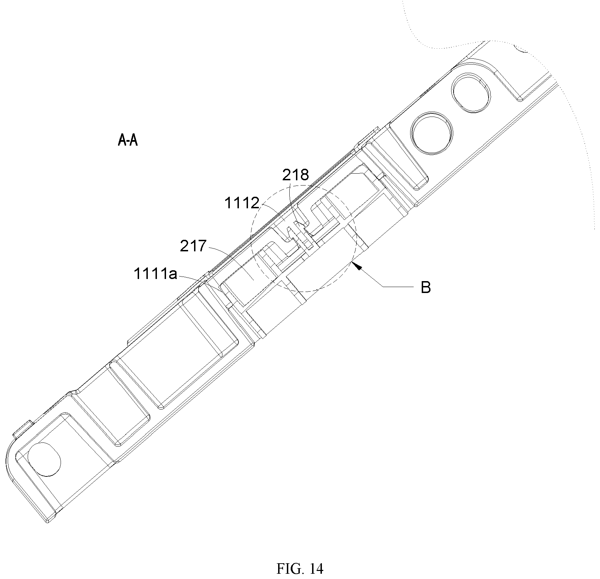

In some embodiments, as shown in Fig. 7, along the width direction Y of the battery pack 1, one avoidance portion 1111 is provided therein with two limit-mating grooves 1111a, and a snap-fit hole 1112 is provided between two limit-mating grooves 1111a. As shown in Figs. 8 and 14, along the width direction Y of the battery pack 1, the first body 21 is provided with two mating portions 217 arranged at intervals, and a first snap 218 is provided between two mating portions 217. Along the width direction Y of the battery pack 1, the side walls of the two mating portions 217 away from the first snap 218 abut against the limit-mating grooves, while the side walls of the two mating portions 217 close to the first snap 218 do not abut against the limit-mating grooves. This is beneficial to reducing a tolerance, facilitating production and processing, reducing the difficulty of snap-fit connection between the first body 21 and the end plate 111, and facilitating assembly.

In one or more embodiments, as shown in Figs. 8 and 10, the second body 22 includes a mounting seat 224 for fixing the electrical connection bar 112. The first output terminal base assembly 2 further includes a protective cover 23. The protective cover 23 is detachably connected to the second body 22, and along the height direction Z of the battery pack 1, there is a safety gap H between the protective cover 23 and the second body 22.

In an embodiment, the electrical connection bar 112 is fixed to the mounting seat 224 by a screw, and the protective cover 23 can cover the electrical connection bar 112, thereby being beneficial to improving the protection effect. In addition, the protective cover 23 includes an extension portion 236 extending along the height direction Z of the battery pack 1, so that there is a minimum safety gap H between the extension portion 236 and the second body 22. This prevents workers from accidentally touching the electrical connection bar 112 located between the protective cover 23 and the second body 22, thereby improving the use safety of the battery pack 1.

In addition, as shown in Fig. 8, the top of the second body 22 is further provided with multiple partitions, thereby making the top of the second body 22 approximately be formed as a grid-like structure, which increases the creepage distance. The principle herein is the same as the principle of creepage described above, which is not elaborated herein. In addition, it can improve the structural strength of the second body 22.

The electrical connection bar 112 can be made of aluminum alloy, copper alloy, nickel alloy, or a coating of an alloy material.

In one or more embodiments, as shown in Figs. 12 and 19 to 21, the protective cover 23 at least includes a second snap 232 and a third snap 2341. The second body 22 includes a first barrier wall 221 along the width direction Y of the battery pack 1 and a second barrier wall 222 along the length direction X of the battery pack 1. The first barrier wall 221 is provided with a first snap-groove 2211, and the second barrier wall 222 is provided with a second snap-groove 2221. The first snap-groove 2211 is in snap-fit connection with the second snap 232, and the second snap-groove 2221 is in snap-fit connection with the third snap 2341. The second snap 232 can move relative to the second body 22 or elastically deform, so that the protective cover 23 can be disconnected from the second body 22.

In an embodiment, the second snap 232 protrudes along the width direction Y of the battery pack 1, and the third snap 2341 protrudes along the length direction X of the battery pack 1. That is, the second snap 232 and the third snap 2341 are asymmetrically arranged at the protective cover 23. When the protective cover 23 is connected to the second body 22, the first snap-groove 2211 is in snap-fit connection with the second snap 232, and the second snap-groove 2221 is in snap-fit connection with the third snap 2341, thereby restricting the protective cover 23 and the second body 22 from separating from each other along the height direction Z of the battery pack 1.

Therefore, the second snap 232 and the third snap 2341 are asymmetrically arranged at the protective cover 23, so that the protruding directions of the second snap 232 and the third snap 2341 are different. As a result, the direction of the force to drive the second snap 232 to disengage from the first snap-groove 2211 is different from the direction of the force to drive the third snap 2341 to disengage from the second snap-groove 2221. When the battery pack 1 vibrates, since the vibration direction of the battery pack 1 is usually the same, the vibration cannot disengage the second snap 232 and the third snap 2341 from the second body 22 simultaneously. This can greatly reduce a risk of the protective cover 23 separating from the second body 22, thus reducing the risks of fire, explosion, etc., caused by the detachment of the protective cover 23, and greatly improving the use safety performance of the battery pack 1.

In one or more embodiments, as shown in Figs. 12 and 19 to 21, the protective cover 23 further includes a first limit wall 231 and a second limit wall 233 arranged at intervals along the width direction Y of the battery pack 1, and a third limit wall 234 arranged along the length direction X of the battery pack 1. The second body 22 further includes a third barrier wall 225 arranged along the width direction Y of the battery pack 1.

The third snap 2341 is provided at the third limit wall 234. The first limit wall 231 and the second snap 232 are located at two sides of the first barrier wall 221. The first limit wall 231 abuts against the first barrier wall 221, the second limit wall 233 abuts against the third barrier wall 225, and each of the first limit wall 231 and the second limit wall 233 abuts against the second barrier wall 222.

When the protective cover 23 is in snap-fit connection with the second body 22, along the width direction Y of the battery pack 1, the first limit wall 231 abuts against the first barrier wall 221, and the second limit wall 233 abuts against the third barrier wall 225, thereby restricting the relative movement of the protective cover 23 relative to the second body 22 along the width direction Y of the battery pack 1. Moreover, along the length direction X of the battery pack 1, each of the first limit wall 231 and the second limit wall 233 abuts against the second barrier wall 222, and the third limit wall 234 abuts against the second barrier wall 222, thereby restricting the relative movement of the protective cover 23 relative to the second body 22 along the height direction Z of the battery pack 1.

Therefore, the limit walls of the protective cover 23 abut against the barrier walls of the second body 22, thereby restricting the relative movement of the protective cover 23 and the second body 22 along the width direction Y and the length direction X of the battery pack 1, thus further improving the reliability and stability of the connection between the protective cover 23 and the second body 22.

In summary, by means of the snap-fit connection of the second snap 232 and the third snap 2341 with the corresponding first snap-groove 2211 and second snap-groove 2221, and the abutment of each limit wall against the corresponding barrier wall, the protective cover 23 is restricted from separating from the second body 22 along the length direction X, the width direction Y, and the height direction Z of the battery pack 1. This greatly increases the firmness between the protective cover 23 and the second body 22, thus greatly reducing the risk that the protective cover 23 and the second body 22 are disengaged from each other due to the vibration of the battery pack 1.

In addition, since the second snap 232 protrudes along the width direction Y of the battery pack 1, when the battery pack 1 is subjected to a vibration force along the width direction Y, there is only a possibility that the second snap 232 may disengage from the first snap-groove 2211. Even if the second snap 232 disengages from the snap-fit connection with the first snap-groove 2211, under the cooperation of the third snap and the second snap-groove 2221, and with the abutment of each limit wall against the corresponding barrier wall, the relative movement of the protective cover 23 relative to the second body 22 along the width direction Y, the length direction X, and the height direction Z of the battery pack 1 is still restricted. Thus, the protective cover 23 still cannot be disconnected from the second body 22, thereby improving the firmness of the connection between the protective cover 23 and the second body 22, thus enabling the first output terminal base assembly 2 to have good anti-vibration performance.

When the protective cover 23 needs to be removed from the second body, the second snap 232 is driven to move or elastically deform (such as lifting up the second snap 232), so that the second snap 232 forms a certain angle with the width direction Y of the battery pack 1 on the plane formed by the width direction Y and the height direction Z of the battery pack 1. As a result, the second snap 232 disengages from the snap-fit connection with the first snap-groove 2211, and then the protective cover 23 inclines relative to the second body 22, thereby allowing the disconnection of the protective cover 23 from the second body 22. The above-mentioned disassembly method of driving the snap at a side surface of the protective cover 23 to move or deform is beneficial for reducing a risk of damaging the structures of the protective cover 23 and the second body 22, and is conducive to reducing the cost of disassembly, assembly, and maintenance.

In addition, the third snap 2341 can also move or elastically deform relative to the second body 22 to facilitate the connection and disconnection between the protective cover 23 and the second body 22.

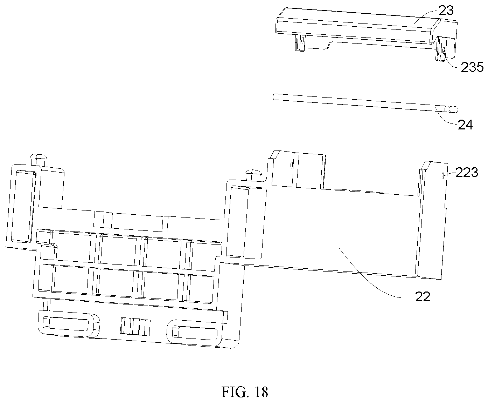

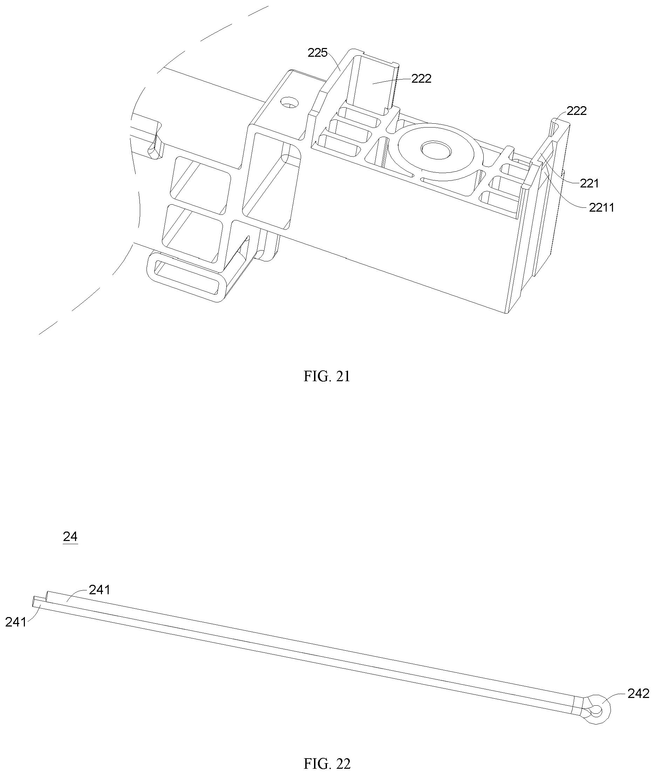

In some other embodiments, as shown in Figs. 18 and 22, the first output terminal base assembly may further include a fastening pin 24. The protective cover 23 includes a first through-hole 235, and the second body 22 includes a second through-hole 223. The fastening pin 24 passes through the first through-hole 235 and the second through-hole 223, so that the protective cover 23 is detachably connected to the second body 22.

In an example, as shown in Fig. 22, two ends of the fastening pin 24 are provided with a fixing portion 242 and two deformable portions 241. The deformable portions 241 can elastically deform. The two deformable portions 241 can pass through the first through-hole 235 and the second through-hole 223 to extend out. Along the width direction Y of the battery pack 1, the fixing portion 242 abuts against the second body 22, and the two deformable portions 241 deform towards a direction away from each other, thereby causing the deformable portions 241 to abut against the second body 22 (for example, at this time, the fastening pin 24 is approximately formed as a T-shape). Consequently, the deformable portions 241 cannot disengage through the first through-hole 235 and the second through-hole 223, thereby fixing the protective cover 23 and the second body 22 to each other. When the protective cover 23 needs to be removed from the second body 22, the two deformable portions 241 are driven to move towards each other and abut against each other, thereby making the deformable portions 241 of the fastening pin 24 in a straight-line shape, that is, the fastening pin 24 shown in Fig. 22. Then, the two deformable portions 241 can disengage through the first through-hole 235 and the second through-hole 223, thereby disconnecting the protective cover 23 from the second body 22. Therefore, connecting the protective cover 23 and the second body 22 with the fastening pin 24 is beneficial for improving the stability of the connection between the protective cover 23 and the second body 22, enhancing the anti-vibration performance of the battery pack 1, and causing no damage to the protective cover 23 and the second body 22 during the disassembly.

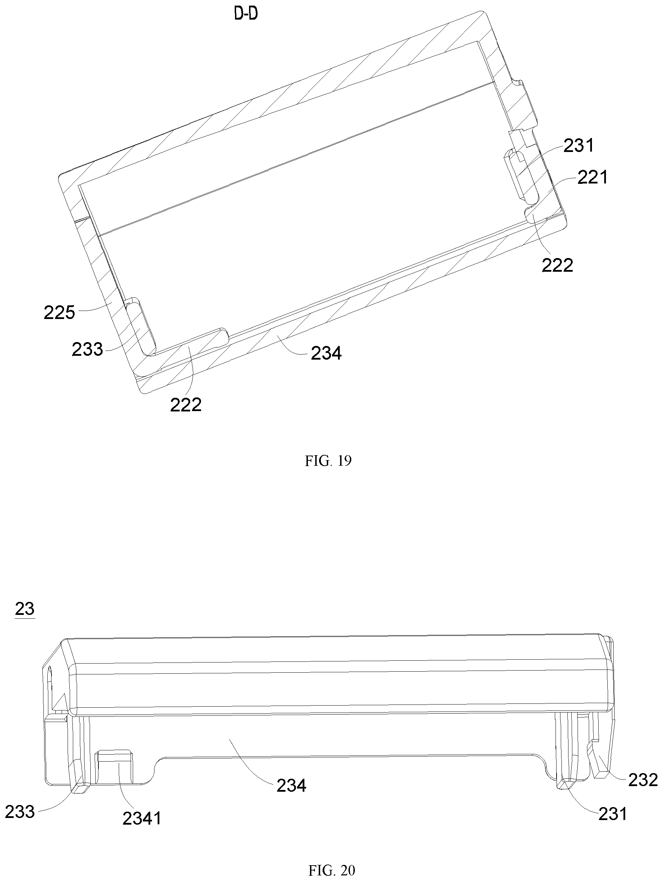

In addition, the fastening pin 24 can also be used in the embodiments shown in Fig. 19. As long as the first through-hole 235 is provided at the first limit wall 231 and the second limit wall 233, and the second through-hole 223 is provided at the first barrier wall 221 and the third barrier wall 225, it can further improve the stability of the connection between the protective cover 23 and the second body 22.

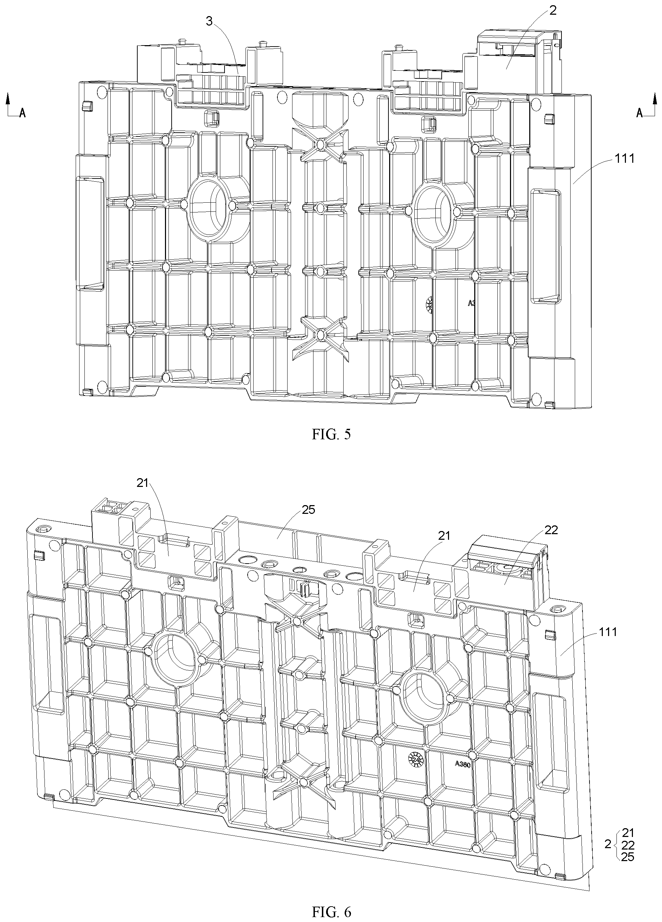

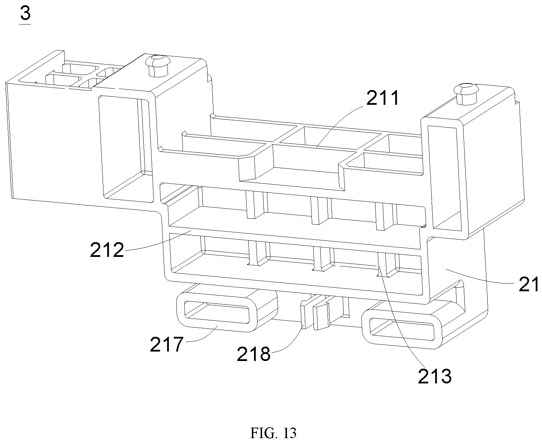

In one or more embodiments, as shown in Figs. 5 and 13, the battery pack 1 further includes at least one second output terminal base assembly 3, and the second output terminal base assembly 3 includes a first body 21. The first body 21 and the second body 22 of the first output terminal base assembly 2 are formed as an integral structure.

In an example, as shown in Fig. 13, the battery pack 1 may include multiple connectors 114. The first body 21 of the second output terminal base assembly 3 is used to fix the connectors 114, thereby improving the collection and output performance of the battery pack 1. The second output terminal base assembly 3 is also provided with the above-mentioned mating portion 217 and first snap 218, and the end plate 111 is also provided with a mating-groove and a snap-fit hole 1112 that cooperate with the second output terminal base assembly 3, so that the second output terminal base assembly 3 can be fixed to the end plate 111. In addition, the first body 21 of the second output terminal base assembly 3 also has the grid-like structure formed by the above-mentioned board body 211 and multiple partitions, thereby reducing the risk of creepage occurring between charged metal components.

In one or more embodiments, as shown in Figs. 6 and 11, the first output terminal base assembly includes a mounting board 25 and at least two first bodies 21. Along the width direction Y of the battery pack 1, adjacent first bodies 21 are connected by the mounting board 25. The first body 21, the second body 22, and the mounting board 25 are formed as an integral structure.

In an example, at least two first bodies 21 are all used to fix the connectors 114. The mounting board 25 is provided with a first snap 218, and the end plate 111 is provided with at least one snap-fit hole 1112 that is in snap-fit connection with the first snap 218 of the mounting board 25. This is beneficial for reducing the processing steps of the first output terminal base assembly 2 and reducing the production cost. In addition, compared with a case that each of the first body 21 and the second body 22 is separately provided, the integral formation of the first body 21, the second body 22, and the mounting board 25 can reduce the need for multiple assembly processes and improve the efficiency. Moreover, the integrally-formed first output terminal base assembly 2 has higher structural stability and can reduce a risk of individual components detaching from the end plate 111, thereby improving the stability of the first output terminal base assembly 2 when being installed at the end plate 111.

The embodiments of the present disclosure further provide an energy-storage box. As shown in Fig. 1, the energy-storage box includes an inverter, a battery management system, and at least one battery pack 1, and the battery pack 1 can be the battery pack 1 in any of the above-mentioned embodiments.

When the battery pack 1 is used in the energy-storage box, there is at least one cavity 219 between the board body 211 and the first partitions 212 of the first output terminal base assembly 2 of the battery pack 1, thereby enabling the current to flow around the cavity 219. That is, the current needs to cross over the first partition 212 in order to flow towards the charged metal components, thereby increasing the creepage distance. This prevents the creepage current between two charged metal components from flowing along a straight-line path, thereby reducing a risk of creepage occurring between the connector 114 and metal components such as the end plate 111, thus reducing the risk of potential safety hazards, and being beneficial to improving the electrical safety performance of the energy-storage box.

## Claims

1. A battery pack (1), **characterized in that**, comprising:
a battery module (11), comprising end plates (111), an electrical connection bar (112), and a plurality of battery cells that are located between the end plates (111) and electrically connected to the electrical connection bar (112);
a connector (114) electrically connected to the electrical connection bar (112); and
a first output terminal base assembly (2), comprising a first body (21) for fixing the connector (114) and a second body (22) for fixing the electrical connection bar (112),
wherein the first body (21) comprises a board body (211) and at least two first partitions (212) arranged at intervals, the at least two first partitions (212) protrude relative to the board body (211) along a length direction (X) of the battery pack (1), and at least one cavity is formed between the board body (211) and the at least two first partitions (212).

2. The battery pack (1) according to claim 1, **characterized in that**, the end plate (111) is made of a metal material, and the first output terminal base assembly (2) is made of an insulating material.

3. The battery pack (1) according to claim 1, **characterized in that**,
the first body (21) further comprises at least two second partitions (213) arranged at intervals, and the at least two second partitions (213) connect adjacent first partitions (212);
along the length direction (X) of the battery pack (1), a first distance L from a surface of the second partition (213) to a surface of the first partition (212) satisfies 5mm≤L≤10mm; and
the first partition (212) is perpendicular to a height direction (Z) of the battery pack (1).

4. The battery pack (1) according to claim 3, **characterized in that**, the first partitions (212) each are perpendicular to the height direction (Z) of the battery pack (1), and the second partitions (213) each are parallel to the height direction (Z) of the battery pack (1), in such a manner that the first partitions (212) and the second partitions (213) form a square grid-like structure.

5. The battery pack (1) according to claim 3, **characterized in that**, a top of the first body (21) is provided with the second partition (213) and a third partition (214) that is arranged parallel to the height direction (Z) of the battery pack (1).

6. The battery pack (1) according to claim 5, **characterized in that**, the second partition (213) at the top of the first body (21) is configured to connect at least two third partitions (214) along the length direction (X) of the battery pack 1, in such a manner that the top wall of the first body (21) is approximately formed as a grid-like structure.

7. The battery pack (1) according to claim 1, **characterized in that**, further comprising a printed circuit board (115) fixedly connected to the connector (114),
the first body (21) comprises a fixing member (215), the printed circuit board (115) is provided with a fixing hole (1151), and the fixing member (215) is capable of extending into the fixing hole (1151) to cause the first body (21) to be relatively fixed to the connector (114); and
the fixing member (215) is a protruding post extending along a height direction (Z) of the battery pack (1), and the printed circuit board (115) and the first body (21) are riveted by the fixing member (215), or the fixing member (215) is a screw, the printed circuit board (115) and the first body (21) are thread-connected by the fixing member (215), the first body (21) has an avoidance space (216), and the screw is capable of extending into the avoidance space (216).

8. The battery pack (1) according to claim 1, **characterized in that**, the end plate (111) comprises an avoidance portion (1111) recessed downward along a height direction (Z) of the battery pack (1), the avoidance portion (1111) is provided therein with a limit-mating groove (1111a), the first body (21) further comprises a mating portion (217), the first body (21) is installed at the avoidance portion (1111), the mating portion (217) is located at the limit-mating groove (1111a), and a bottom wall of the limit-mating groove (1111a) along the length direction (X) of the battery pack (1) is configured to prevent the mating portion (217) from separating from the limit-mating groove (1111a).

9. The battery pack (1) according to claim 8, **characterized in that**, the limit-mating groove (1111a) is located in the avoidance portion (1111), in such a manner that a surface of the first body (21) is flush with a surface of the end plate (111) along the length direction (X) of the battery pack (1).

10. The battery pack (1) according to claim 1, **characterized in that**, the end plate (111) further comprises a snap-fit hole (1112), the first body (21) further comprises a first snap (218), the first snap (218) is in snap-fit connection with the snap-fit hole (1112), an inner wall of the snap-fit hole (1112) comprises a first inclined surface (1112a), the first snap (218) comprises a second inclined surface (2181), and during a process of the first snap (218) being in snap-fit connection with the snap-fit hole (1112), the first inclined surface (1112a) is in sliding fit with the second inclined surface (2181).

11. The battery pack (1) according to any one of claims 1 to 10, **characterized in that**,
the second body (22) comprises a mounting seat (224) for fixing the electrical connection bar (112), the first output terminal base assembly (2) further comprises a protective cover (23), the protective cover (23) is detachably connected to the second body (22), and along a height direction (Z) of the battery pack (1), a safety gap H is formed between the protective cover (23) and the second body (22);
the protective cover (23) at least comprises a second snap (232) and a third snap (2341), the second body (22) comprises a first barrier wall (221) along a width direction (Y) of the battery pack (1) and a second barrier wall (222) along the length direction (X) of the battery pack (1), the first barrier wall (221) is provided with a first snap-groove (2211), the second barrier wall (222) is provided with a second snap-groove (2221), the first snap-groove (2211) is in snap-fit connection with the second snap (232), and the second snap-groove (2221) is in snap-fit connection with the third snap (2341); and
the second snap (232) is capable of moving relative to the second body (22) or elastically deforming to allow the protective cover (23) to be disconnected from the second body (22).

12. The battery pack (1) according to claim 11, **characterized in that**,
the protective cover (23) further comprises: a first limit wall (231) and a second limit wall (233) that are arranged at intervals along the width direction (Y) of the battery pack (1), and a third limit wall (234) arranged along the length direction (X) of the battery pack (1); and the second body (22) further comprises a third barrier wall (225) arranged along the width direction (Y) of the battery pack (1); and
the third snap (2341) is provided at the third limit wall (234), the first limit wall (231) and the second snap (232) are located at two sides of the first barrier wall (221), and the first limit wall (231) abuts against the first barrier wall (221), the second limit wall (233) abuts against the third barrier wall (225), and each of the first limit wall (231) and the second limit wall (233) abuts against the second barrier wall (222).

13. The battery pack (1) according to claim 11, **characterized in that**, the first output terminal base assembly (2) further comprises a fastening pin (24), the protective cover (23) comprises a first through-hole (235), the second body (22) comprises a second through-hole (223), and the fastening pin (24) passes through the first through-hole (235) and the second through-hole (223) to allow the protective cover (23) to be detachably connected to the second body (22).

14. The battery pack (1) according to claim 11, **characterized in that**, the second snap (232) protrudes along the width direction (Y) of the battery pack (1), and the third snap (2341) protrudes along the length direction (X) of the battery pack (1), in such a manner that the second snap (232) and the third snap (2341) are asymmetrically arranged at the protective cover (23).

15. The battery pack (1) according to any one of claims 1 to 14, **characterized in that**,
the battery pack (1) further comprises at least one second output terminal base assembly (3), the second output terminal base assembly (3) comprises the first body (21);
the first body (21) and the second body (22) of the first output terminal base assembly (2) are formed as an integral structure, or
the first output terminal base assembly (2) comprises a mounting board (25) and at least two first bodies (21), and along a width direction (Y) of the battery pack (1), adjacent first bodies (21) are connected to each other by the mounting board (25); and the at least two first bodies (21), the second body (22) and the mounting board (25) are formed as an integral structure.
